(19) Europäisches Patentamt
European Patent Office
Office européen des brevets

(11) Publication number: 0 281 655 B1

# (12) EUROPEAN PATENT SPECIFICATION

(45) Date of publication of the patent specification: 03.10.90

(51) Int. Cl.$^5$: C08B 31/12, A23L 1/226

(21) Application number: 87103550.7

(22) Date of filing: 11.03.87

## (54) Aldehyde-containing heteropolysaccharides, a process for their preparation and the use thereof.

(43) Date of publication of application: 14.09.88 Bulletin 88/37

(45) Publication of the grant of the patent: 03.10.90 Bulletin 90/40

(84) Designated Contracting States: CH DE FR GB IT LI NL

(56) References cited:
EP-A- 0 153 501
GB-A- 625 644
GB-A- 1 221 760
US-A- 3 297 604
US-A- 4 499 116

DIE MAKROMOLEKULARE CHEMIE, vol. 57, 1962, pages 109-128, Hüthig & Wepf Verlag, Basel, CH; E. HUSEMANN et al.: "Über die Darstellung definiert verzweigter Polysaccharide. I. Einführung von Mono- und Disacchariden in Amylose"
"Industrial Gums", 2nd Edition (R. Whistler), Academic Press 1973, page 331

(73) Proprietor: National Starch and Chemical Investment Holding Corporation, 10 Finderne Avenue, Bridgewater, New Jersey 08807(US)

(72) Inventor: Chung-Wai, Chiu, 305 Woods End Road, Westfield New Jersey 07090(US)

(74) Representative: Hagemann, Heinrich, Dr. Dipl.-Chem. et al, Patentanwälte HAGEMANN & KEHL Ismaninger Strasse 108 Postfach 860329, D-8000 München 86(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to aldehyde-containing synthetic heteropolysaccharides and a process for their preparation.

Polysaccharide compositions have been utilized in many diverse industrial applications, for example, as thickeners, adhesives, sizing agents, etc. Polysaccharides such as starch and cellulose, which have been modified to contain aldehyde groups, have found use particularly in the paper and textile industries.

Both oxidative and non-oxidative methods have been employed to introduce aldehyde groups onto polysaccharides. Oxidative methods which have been used include treating with periodic acid, periodates, alkali metal ferrates, or alkali metal bromites, as described, for example, in US-A 3 086 969; 3 553 193; and 3 632 802. Non-oxidative methods which have been used include the reaction of polysaccharide with an aldehyde-containing reagent as described in US-A 3 519 618 and 3 740 391.

Polygalactomannan gums (i.e. guar gum) and other natural galactose-containing polymers modified to possess aldehyde groups are useful as crosslinking agents and have been employed in various film-forming applications as adhesives or binding agents in self-sustaining films.

Such aldehyde gum derivatives can be prepared by similar oxidative and non-oxidative methods to those mentioned above or, as described in US-A 3 297 604, polygalactomannans and other natural polysaccharides containing galactose configurations at the $C_4$ position (i.e., talose) may be selectively oxidized at the $C_6$ position of the saccharide unit by the enzyme galactose oxidase in order to yield aldehyde groups. EP-A 153 501 discloses polysaccharide containing starch ether derivatives, but not the preparation of novel aldehyde-containing starch ether derivatives according to the present invention. US-A 3 297 604 relates to naturally occurring galactose-containing polysaccharides which are oxidized at the $C_6$ position to produce galacto-hexoaldose which are useful as intermediates in cross-linking polysaccharides, and in film-forming applications such as adhesive or binding agents.

While commercially useful polysaccharide aldehydes have been obtained by various oxidative and non-oxidative methods, there is a continual demand to meet a broad industrial need for new polysaccharide compositions with unique rheological properties which also possess the aldehyde functionality.

There is therefore a need for aldehyde-containing heteropolysaccharides, the polysaccharides being capable of undergoing cross-linking reactions alone or with other organic compounds. None of the above references disclose or suggest the products herein.

The present invention provides an aldehyde-containing starch ether derivative having the structure R′ –O–A–O-Starch, wherein A is $-CH_2-CH_2-$ or

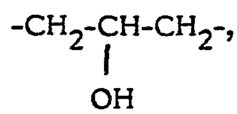

Starch-O represents a starch molecule, and R′ is

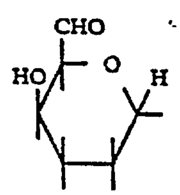

which represents a monosaccharide containing a galactose configuration at the $C_4$ position with the oxygens being attached to the glycosidic carbon atom of the monosaccharide by an acetal linkage and to the starch by an ether linkage.

Typical monosaccharides include hexoses, such as galactose and talose. The corn and wheat starch ether derivatives in aqueous solution after gelatinization exhibit stable cook properties. Such cook stability permits the derivatives herein to be utilized for example, in various food and thickening applications.

The aldehyde-containing starch ether derivatives are prepared by reacting a mixture of a) an aqueous dispersion of a starch ether having the formula

R"-O-A-O-Starch, where R" is 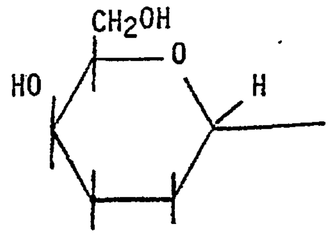

and b) a galactose oxidase enzyme in the presence of oxygen whereby the $C_6$ position of the monosaccharide is oxidized to form a carbonyl group.

The present invention also provides an improved process for preparing an artificial flavor comprising heating together in an aqueous medium, a mixture comprising at least one amino acid and a saccharide, wherein at least a portion of the saccharide is replaced with a starch aldehyde having the structure R′–O–A–O-Starch.

Glycosides may be prepared from mono- and polysaccharides which contain a reducing carbon atom. This carbon atom, which is located in the terminal saccharide ring, is capable of reacting with an alcohol to form glycosidic products attached by an acetal or ketal linkage, depending on the mono- or polysaccharide employed.

A. Halohydrin and Glycidyl Glycoside Reagents.

One class of glycosides applicable for use as reagents in preparing the glycoside starch ethers useful herein include glycosides having the formula:

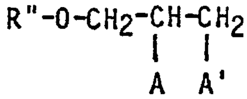 or 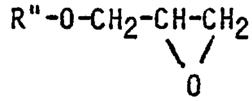

wherein R″ is as shown above and represents a monosaccharide containing a galactose configuration at the $C_4$ position and where the O is attached to the glycosidic carbon atom of the monosaccharide (i.e., the $C_1$ position), and A and A′ are alternately a hydroxyl or a halogen selected from the group consisting of chlorine or bromine.

The halohydrin or glycidyl glycosides may be prepared according to the methods described in US-A 3 931 148 which teaches that glycosides may be 50zprepared by reacting monosaccharides at temperatures of about 94° to 108°C with 3-chloro-1,2-propandiol in the presence of about 0.01 to 2.0 weight percent, based on the reactants, of a strong acid catalyst.

The halohydrin or glycidyl glycosides are preferably prepared by reacting the monosaccharide in an excess of 3-halo-1,2-propandiol in the presence of a cation exchange resin. By employing a cation exchange resin, the glycosides may be prepared at moderate temperatures without charring which is often caused by strong low molecular weight acids at the higher temperatures mentioned above. The reaction is conducted with stirring at a temperature of about 55–80°C over a period of about 3–20 hours. After the reaction is complete, the mixture is filtered in order to remove the cation exchange resin. The excess diol may then be removed by vacuum distillation or washing with organic solvents in order to obtain the 3-halo-2-hydroxypropyl glycoside.

The haloegnated propandiols which may be employed include 3-chloro1,2-propandiol and 3-bromo-1,2-propandiol. The use of the chloro derivative is preferred due to its commercial availability and cost. While a saccharide to diol ratio of as little as 1:1.4 has been employed, a preferred ratio is at least 1:3 to 1:6, most preferably 1:5.

Any cation exchange resin may be used in the glycoside preparation. Suitable exchange resins include sulfonated-crosslinked polystyrene such as commercially available Amberlite® IR-120 from Rohm and Haas, Dowex® 50 from Dow Chemical and Permutit® Q from Permutit; sulfonated phenolics such as Duolite® C–3 from Diamond Shamrock; and sulfonated coals such as Zeo Karb® H from Permutit. The preferred cation exchange resin is Dowex® 50. The amount of resin useful herein is about 1 part resin to 2–8 parts by weight of saccharide, preferably 1 part resin to 4–5 parts saccharide.

The glycidyl glycosides useful herein may be prepared by reacting a 3-halo-2-hydroxypropyl glycoside with an alkali metal hydroxide in order to form the epoxide group. Typically, the glycoside is mixed with an aqueous alkaline solution while cooling. The mixture is neutralized with acid and then dissolved in alcohol in order to precipitate the metal salts formed. After filtration, the glycidyl glycoside may be recovered by removing the alcohol and water by vacuum distilation.

B. Haloethyl Glycoside Reagents.

Another class of glycosides which are usefol reagents in preparing the glycoside starch ethers herin have the formula:

$R–O–CH_2CH_2X$

wherein R-O represents a monosaccharide where O is attached to the glycosidic carbon atom of the monosaccharide and X is chlorine or bromine. Any monosaccharide containing a reducing carbon atom may be reacted with a haloethanol in the presence of a strong acid catalyst or a cationic exchange resin, by similar methods described above in order to obtain the haloethyl glycoside. Typical monosaccharides include, for example, glucose, fructose, sorbose, mannose, galactose, talose, xylose, and ribose.

The haloethyl glycosides specifically useful for preparing the starch ethers which are oxidized by enzyme treatment have the formula:

$R''\text{-}O\text{-}CH_2CH_2X$

where R″-O and X are as defined above.

In some instances, the haloethyl glycosides are preferably employed in the preparation of the starch ethers useful herein because impurities (i.e., 1,3-dichloro-2-propanol) present in the 3-halo-1,2-propandiol, used to prepare the halohydrin glycosides, are very difficult to remove from the glycosides and as such will react with starch as a crosslinker.

The halohydrin, glycidyl and haloethyl glycosides herein are capable of reacting under etherification conditions with polysaccharides including, for example, starches and starch conversion products derived from any plant source; starch ethers and esters; cellulose and cellulose derivatives and various plant gums and gum derivatives.

C. Hydroxypropyl and Ethyl Glycoside Starch Ether Derivative Preparation.

The applicable starch bases which may be used in preparing the glycoside starch ether derivatives herein may be derived from any plant source including corn, potato, sweet potato, wheat, rice, sago, tapioca, waxy maize, sorghum, and high amylose corn. Also included are the conversion products derived from any of the latter bases including, for example, dextrins prepared by the hydrolytic action of acid and/or heat; oxidized starches prepared by treatment with oxidants such as sodium hypochlorite; fluidity or thin-boiling starches prepared by enzyme conversion or mild acid hydrolysis; and derivatized starches such as ethers and esters. The starch base may be a granular starch or a gelatinized starch, i.e., non-granular starch.

Methods for preparing the modified starch bases useful herein are well-known to those skilled in the art and discussed in the literature. See, for example, R. L. Whistler, Methods in Carbohydrate Chemistry, Vol. IV, 1964, pp. 279-311; R. L. Whistler et al., Starch-Chemistry and Technology, Vol. II, 1967, pp. 293-450; and R. Davidson and N. Sittig, Water Soluble Resins, 2nd Ed., 1968, Chapter 2.

The starch etherification reactions herein may be represented by the following equations:

$$\text{I.}\qquad R''\text{-}O\text{-}CH_2\underset{A}{C}H\underset{A'}{C}H_2 + \text{Starch-OH} \xrightarrow{OH^-} R''\text{-}O\text{-}CH_2\underset{OH}{C}HCH_2\text{-}O\text{-Starch}$$

$$\text{II.}\qquad R''\text{-}O\text{-}CH_2CH_2X + \text{Starch-OH} \xrightarrow{OH^-} R''\text{-}O\text{-}CH_2CH_2\text{-}O\text{-Starch}$$

wherein Starch-OH represents a starch molecule and R″, A, A′, and X are as defined above.

It should be noted that use of a glycidyl glycoside herein will result in the same starch reaction product (see Equation I) as will use of the halohydrin glycoside. The etherification reaction proceeds only under alkaline conditions after the halohydrin group is first converted to the epoxide form.

Equation II represents the specific reaction of the preparation of the starch ethers useful in the preparation of the novel starch aldehydes herein. It is, however, only one embodiment of the reaction which produces novel starch derivatives from haloethyl glycosides and starch which may be represented by the equation:

$R\text{-}O\text{-}CH_2CH_2X + \text{Starch-OH} \rightarrow R\text{-}O\text{-}CH_2CH_2\text{-}O\text{-Starch}$

wherein Starch-OH, R, and X are as previously defined. While not wishing to be bound by theory, it is believed that the haloethyl group reacts with the starch molecule through a neighboring group participation mechanism.

The practitioner will recognize that the starch molecule is a polysaccharide composed of many anhydroglucose units, each having three free hydroxyl groups (except the non-reducing end glucose units which contain four free hydroxyl groups) which may react with the glycoside reagent. Thus, the number

of such displacements or the degree of substitution (D.S.) will vary with the particular starch, the ratio of reagent to starch, and to some extent, the reaction conditions. Furthermore, since it is known that the relative reactivity of each of the hydroxyl groups within the anhydroglucose unit is not equivalent, it is probable that some will be more reactive with the reagent than others.

The monosaccharide portion of the glycoside reagents also contain free hydroxyl groups. It should therefore be understood that during the etherification reaction, there is a possibility that a glycoside reagent may react with another reagent molecule. Such a reaction would yield a saccharide-containing molecule which would still contain an unreacted glycidyl or haloethyl group capable of reacting with starch and a saccharide unit which contains the galactose configuration at the $C_4$ position. No crosslinking will result from this reaction since there is only one reactive site per molecule.

The starch reaction may be conducted by a number of techniques known in the art employing, for example, an aqueous reaction medium, an organic solvent medium, or a dry heat reaction technique wherein a wet starch cake is impregnated with the glycoside reagent then subjected to dry heat.

In the preferred method, the reaction is carried out in an aqueous medium using either an aqueous slurry or an aqueous dispersion of the starch base. The glycoside reagent may be added to the reaction mixture as a solid or an aqueous solution. The preferred concentration of the solution is 20-50% by weight, based on the weight of reagent. In an alternative method, the glycoside reagent solution is brought to the desired alkaline pH prior to its addition to the starch base, this being accomplished by the addition of sufficient alkali. In another variation, dry starch may be added to an alkaline solution of the glycoside reagent.

The amount of glycoside reagent to be employed in the reaction with the starch herein will generally vary from about 0.1 to 100% by weight, based on the weight of dry starch, depending on such factors as the starch based used, the glycoside reagent used, the degree of substitu tion desired in the end product, and, to some extent, the reaction conditions used.

The starch reaction is carried out under alkaline conditions, at a pH of 11-13, preferably 11.4-12.4. Alkali may be added to the starch slurry or dispersion either prior to or after the addition of the glycoside reagent. The pH is conveniently controlled by the addition of sodium hydroxide, potassium hydroxide, calcium hydroxide, tetramethylammonium hydroxide, and the like. The preferred base is sodium hydroxide.

When conducting the reaction with granular starches, it may sometimes be desirable to carry out the reaction in the presence of salts, e.g. sodium sulfate, in amounts of from about 10 to 40% by weight, based on dry starch. The presence of sodium sulfate acts to suppress swelling of the starch and gives a more filterable product. The sodium sulfate is not used in the calcium hydroxide reactions.

The reaction mixture is agitated under the desired reaction conditions. The reaction time may vary from 0.5 to 20 hours, depending on such factors as the amount of the glycoside reagent employed, the temperature, the pH, the scale of the reaction, and the degree of substitution desired. In general, the preferred range of reaction times is from 6 to 16 hours.

The reaction is carried out at a temperature of from 20°-95°C., preferably 25°-45°C. It will be recognized by the practitioner that the use of temperatures above about 60°C. with granular starches in an aqueous medium will result in granule swelling and filtration difficulties or in gelatinization of the starch. In instances where higher reaction temperatures are desired, an aqueous solution containing a water-miscible solvent may be employed to prevent swelling.

After completion of the reaction, the pH of the reaction mixture is adjusted to a value of from 3 to 7 with any commercial acid such as hydrochloric acid, sulfuric acid or acetic acid. Such acids may be conveniently added as a dilute aqueous solution.

Recovery of the derivatives may be readily accomplished, with the particular method employed being dependent on the form of the starch base. Thus, a granular starch is recovered by filtration, optionally washed with water to remove any residual salts, and dried. The granular starch products may also be drum-dried, spray-dried, Or gelatinized and isolated by alcohol precipitation or freeze drying to form nongranular products (i.e. gelatinized). If the starch product is nongranular, it may be purified by dialysis to remove residual salts and isolated by alcohol precipitation, freeze drying, or spray drying.

D. Aldehyde-Containing Starch Derivative Preparation.

The aldehyde-containing starch derivatives herein can be prepared according to the invention by enzymatic oxidation of those glycoside starch ethers described above and shown in Equations I and II, wherein the glycoside substituent (R″) is the monosaccharide containins a galactose configuration at the $C_4$ position. Such monosaccharides, are exemplified by galactose and talose:

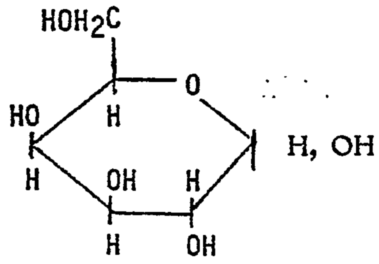 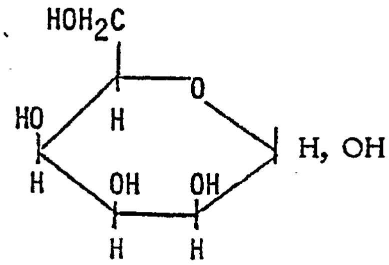

Oxidation at the $C_6$ position of the glycoside substituent is effected by incubating the starch ether derivative which has been dispersed in an aqueous buffer solution in an amount determined by the solubility of the components, with the galactose oxidase. The reaction is conducted in the presence of oxygen at a pH range from 4 to 9, preferably 5 to 8, and at a temperature of 10° to 60°C with ambient temperatures preferred. The oxidation is preferably conducted in the presence of the enzyme catalase which facilitates the reduction of hydrogen peroxide (a by product of the oxidation) to water and oxygen.

After the incubation, the enzyme is inactivated (i.e., by removal of the oxygen source, heating, or lowering the pH). The starch aldehydes may then be isolated by known procedures or remain in solution.

Starch reacted with 2-haloethyl galactoglycoside and then oxidized with galactose oxidase, for example, would yield a starch derivative having randomly occurring aldehyde-containing galactose side chains as depicted below:

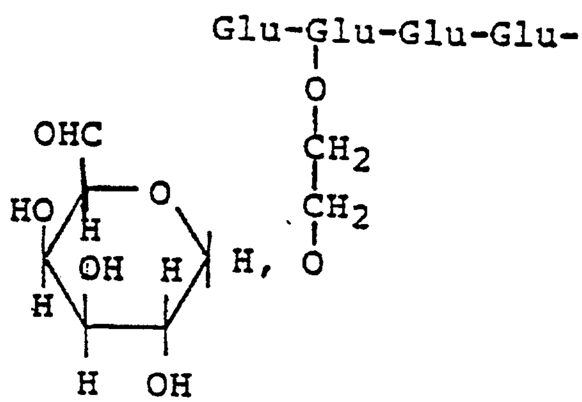

where –Glu–Glu–Glu–Glu– represents the starch chain.

The aldehyde functionality present on the starch derivatives herein renders the products useful, for example, as paper strengthening additives. This aldehyde functionality also makes them useful as co-reactants in the Maillard reaction, the well-known browning and flavor-producing reaction occurring in foods (see US-A 3 716 380 for a description of this reaction, as well as US-A 3 615 600 and 3 761 287 and UK. Pat. 1 285 568).

The process for preparing artificial flavors using the Maillard reaction typically involves reacting together, in the presence of water, a saccharide, one or more amino acids, and optionally other ingredients such as hydrogen sulfide (see U.K. Pat. 1 285 568), succinic acid and a hydroxycarboxylic acid (see U.S. 3 615 600), a polyalcohol (see US-A 3 761 287), or a lower carboxylic acid or fatty acid (see US-A 3 716 380).

Suitable amino acids include glycine, alanine, proline, hydroxyproline, threonine, arginine, glutamic acid, aspartic acid, histidine, lysine, leucine, isoleucine, serine, valine, and taurine. Smaller amounts of tyrosine, tryptophan, cystein, phenylalanine, and methionine are not objectionable, depending upon the flavor desired. Di-, tri-, or higher peptides, or proteins giving rise to the requisite amino acids can also be used. Protein hydrolysates are convenient sources.

The saccharides conventionally used include monosaccharides or di-, tri-, or polysaccharides which yield monosaccharides under the Maillard reaction conditions. The above aldehyde-containing heteropolysaccharides are used as a partial or total replacement for these saccharides.

Factors which affect the nature and quality of the flavor produced include the nature and relative amounts of saccharide, amino acid, and other optional components, as well as the amount of water and temperature and time of the reaction.

All parts and percentages in the following examples are given by weight and all temperatures are in degrees Celsius unless otherwise noted. The carbonyl content of the starch aldehydes was determined using the procedure described in "Quantitative Organic Analysis via Functional Groups", 3rd Edition by Sidney Siggia (John Wiley & Sons, Inc., New York, 1949), p. 73.

EXAMPLE 1

This example illustrates the preparation of the halohydrin and haloethyl glycoside starting materials employed herein:

a. 3-Chloro-2-hydroxypropyl galactoglycoside

To a 0.5 liter round-bottom flask equipped with condenser, mechanical stirrer and wans for heating, there was added 80 g (0.44 mole) of galactose, 237 g (2.15 moles) of 3-chloro-1 2-propandiol, and 20 g Dowex® 50W-X8 cation exchange resin (1.9 meq/ml) in H+ form. The mixture was heated to 60°–63°C and stirred at that temperature for 16 hours.

The reaction mixture was cooled and that filtered over a gauze cloth to remove the resin. The reaction mixture was clear and light yellow in color. Unreacted diol was removed by vacuum distillation at 80°C at 2 mm Hg. The hygroscopic solid product was slurried in acetone and filtered three times to remove residual impurities then dried in a vacuum dessicator.

b. 2-Chloroethyl galactoglycoside

To an apparatus similar to that described in Part a, was added 80 g of galactose, 217 g (2.69 moles) 2-chloroethanol, and 20 g Dowex® 50W-X8. The mixture was heated to and stirred at 55°C for 16 hours and at 80°C for an additional 4 hours. The cation exchange resin was removed as above. The unreacted 2-chloroethanol was then removed by vacuum distillation at 30–35°C at 0.1 mm Hg, then dried in a vacuum dessicator.

EXAMPLE 2

This example illustrates the preparation of an ethyl galactoglycoside starch ether.

A total of 100 parts of corn starch and 10 parts 2-chloroethyl galactoglycoside (as is) were added to a solution of 3.0 parts sodium hydroxide and 30 parts sodium sulfate in 150 parts water. The mixture was agitated for 16 hours at 40–45°C. The pH was then lowered to 5.5 by the addition of 9.3% aqueous hydrochloric acid. The starch derivative (A) was recovered by filtration, washed three times with distilled water and air dried.

Aqueous slurries containing 96 parts water and 8 parts of the derivatized starch product or its underivatized base were cooked for comparison in a boiling water bath for 20 minutes. The gelatinized cooks stood overnight at room temperature before examination. The corn base cook produced a firm gel. The derivatized starch cook, on the other hand, did not form a gel but was stabilized.

EXAMPLE 3

This example illustrates the preparation of an ethyl galactoglycoside ether of a cationic fluidity starch. The term "cationic fluidity starch" refers to the derivatized products of cationic starches.

Corn starch which had been acid hydrolyzed to a final water fluidity (WF) (measured according to US-A 4 499 116) of 75 was first reacted with 2.7% diethylaminoethyl chloride hydrochloride as described in U.S. 2 876 217. Thereafter the cationic fluidity starch was reacted with 30% 2-chloroethyl galactoglycoside as in Example 2. The starch derivative (B) was also recovered by filtration, washed three times with distilled water and air dried.

EXAMPLE 4

Hydroxypropyl galactoglycoside ethers of various starch bases were prepared according to the procedure described in Example 2. The reaction data may be found in Table I.

TABLE I

| Hydroxypropyl Galactoglycoside Starch Ether | Reactants: Starch Base | Starch WF | % 3-chloro-2-hydroxypropyl galactoglycosid |
|---|---|---|---|
| C | waxy maize | -* | 10 |
| D | waxy maize | 85 | 20 |
| E | corn | 74 | 20 |
| F | tapioca | 80 | 20 |

*Starch base was not hydrolyzed.

Comparative Sample G was prepared by reacting 85 HF waxy maize with 20% 3-chloro-1,2-propandiol.

EXAMPLE 5

This example illustrates the preparation of an aldehyde-containing starch derivative by enzymatic oxidation of the ethyl galactoglycoside starch ether of Example 3.

A total of 6.0 g of derivative B was slurried in 90 ml of pH 7 phosphate buffer solution (0.68 parts potassium phosphate, monobasic and 0.16 parts sodium hydroxide in 100 parts distilled water) which contained 0.15 g Dowicide® A (a preservative obtained from Dow Chemical Corp.).

The slurry was cooked for 20 minutes in a boiling water bath (BWB) to gelatinize the starch then cooled to 35°C at which time the Brookfield viscosity of the 30% solids sample was measured (20 rpm, spindle #5) as 0.45 Pas (450 cps). A total of 1.7 mg (225 units) of galactose oxidase and 30 mg (60,000 units) catalase were dissolved in 5 ml of additional buffer solution then added directly to the starch dispersion.

While under continuous oxygen purge the mixture was agitated at 37°C for four days after which time the reaction was stopped by the elimination of the oxygen purge. The 6.4% solids starch dispersion after oxidation had increased in Brookfield viscosity (20 rpm, spindle #7) to over 200 Pas (200,000 cps). The material had a carbonyl content of 0.54%.

EXAMPLE 6

Hydroxypropyl galactoglycoside starch ether derivative, C, was similarly oxidized with galactose oxidase to yield a starch aldehyde derivative.

A total of 14.0 g of C and 0.25 g Dowicide® A was slurried in 286 ml of the phosphate buffer solution and cooked as in Example 5. The 4.5% solids dispersion had an initial Brookfield viscosity (20 rpm, spindle #5) of 3.8 Pas (3,800 cps). A total of 0.57 mg. (75 units) galactose oxidase and 10 mg (20,000 units) catalase were dissolved in 21 ml buffer solution. The enzyme solution was added to the starch dispersion and then reaction was conducted for 24 hours under the conditions described in Example 5. The 4.9% solids starch dispersion after oxidation had increased in Brookfield viscosity (20 rpm, spindle #5) to about 5.9 Pas (5,900 cps). The material had a carbonyl content of 0.32%.

In aqueous dispersion, this particular starch aldehyde product was observed to be uniquely thixotropic, i.e., while stirring it appeared thin, however, when stirring ceased, the product would reform a gel structure.

EXAMPLE 7

Starch galactoglycosides D, E, and F and comparative starch sample G were also oxidized with galatose oxidase as described in Example 5.

The action conditions and results may be found in Table II.

TABLE II

| Starch galactoglycoside | D | E | F | G* |
|---|---|---|---|---|
| % Dispersion Solids | 30 | 15 | 15 | 30 |
| Initial Brookfield Viscosity** in Pas. (cps.) | 0.38 (380) | 0.175 (175) | 0.225 (225) | 0.200 (200) |
| Enzyme Treatment: | | | | |
| Galactose oxidase units/g. starch | 15 | 30 | 30 | 15 |
| Catalase units/g. starch | 4,000 | 8,000 | 8,000 | 4,000 |
| Reaction Conditions: | | | | |
| Temperature (°C) | 37° | 37° | 37° | 37° |
| Time | 16 hrs. | 4 days | 4 days | 4 days |
| Results: | | | | |
| % Dispersion Solids | 25.5 | 11.2 | 11.5 | 11.5 |
| Final Brookfield Viscosity** in Pas. (cps.) | >200 (>200,000) | 0.250 (250) | 0.225 (225) | 0.200 (200) |
| % Carbonyl Content | 0.67 | 0.25 | 0.30 | 0.00 |

* Comparative.
** Measured at 20 rpm, Spindle #5.

In a like manner, starch may be reacted with 2-chloroethyl taloglycoside or 3-chloro-2-hydroxypropyl taloglycoside, as described in Example 2, to yield an ethyl or hydroxypropyl taloglycoside starch ether. These starch ether derivatives may be similarly treated with galactose oxidase as described above to also provide starch aldehyde derivatives.

EXAMPLE 8

This example illustrates the use of an ethyl galactoglycoside starch ether in a pourable sauce formulation.

Corn starch was treated with 20% of 2-chloroethyl galactoglycoside as described in Example 2. The ethyl galactoglycoside starch ether (H) was added to a barbecue sauce formulation and compared with a similar sauce which employed the underivatized corn starch base. The following recipe was employed:

| Ingredients | Parts |
|---|---|
| Starch derivative | 2.5 |
| Sugar | 3.0 |
| Salt | 0.3 |
| Paprika | 0.2 |
| Chili Powder | 0.2 |
| Cinnamon | 0.2 |
| Ground Cloves | 0.2 |
| Tomato Puree | 47.4 |
| Minced Onion | 5.3 |
| Worcestershire Sauce | 6.6 |
| Water | 26.2 |
| Vinegar | 7.9 |

The sauces were heated to 85°C (185°F), held for 15 minutes, and cooled overnight at room temperature prior to observation. The sauce containing starch glycoside (H) was smooth and pourable. This was in contrast to the sauce prepared with the underivatized corn starch which resulted in a lumpy, very heavy product.

EXAMPLE 9

This example describes the use of the starch aldehydes herein as paper strength additives.

Corn starch which had been acid hydrolyzed to a final WF of 70 was first reacted with 3.0% diethylaminoethyl chloride hydrochloride as in Example 3. Thereafter the control cationic fluidity starch (J) was reacted with 20% 2-chloroethyl galactoglycoside as in Example 2.

A 10 g sample of the ethyl galactoglycoside was oxidized with 250 units of starch ether galactose oxidase in the presence of 60,000 units of catalase resulting in a starch aldehyde (K) having an aldehyde content of 0.40%. Unbleached softwood Kraft was refined to a 550 Canadian Standard Freeness. A total of 3.3% alum was added to the furnish and the pH was adjusted to 5.5. The starch derivatives were added to the furnish and four g handsheets were prepared on the Noble and Mood Sheet Mold, pressed, and dried at 149°C (300°F). The Z-directional strength of the sheets was measured using a Scott Bond apparatus. The dry strength of the sheets was recorded in 0.0138 meter-kilograms (foot-pounds) in thousandths. The addition level of the starch was 13.6 kg/907.2 kg (30 lb/ton). Test results are given in Table III.

TABLE III

| Starch Derivative | Dry Strength |
|---|---|
| Blank | 234 |
| Control (J) | 293 |
| Starch Aldehyde (K) | 323 |

The results show that the starch aldehyde gave improved dry strength in comparison to the starch base control from which it was prepared.

EXAMPLE 10

This example describes the preparation of an artificial flavor using the starch aldehyde herein as a replacement for the saccharide used in the Maillard reaction.

A mixture of histidine (0.75 g), tyrosine (0.63 g), glutamic acid (14.21 g), glycine (0.14 g), alanine (1.10 g), and leucine (1.03 g), in water is adjusted to pH 6 (NaOH). The starch aldehyde of Example 5 (3.6 g), glucose (4.5 g), and sodium sulfide nonahydrate (2.68 g) are added, the volume is made up to 76 ml with water and the mixture is heated with stirring under reflux in a 130°C bath for about 6 hours.

After cooling, corn flour (55.2 g) may be added and the product freeze-dried to yield a powdered flavor.

In summary, the present invention is seen to provide ethyl glycoside starch ether derivatives. Moreover, starch aldehydes are provided which are useful in conventional applications where starch aldehydes prepared by other chemical oxidative and nonoxidative wans have been found useful, i.e., in paper and textile sizing. The starch aldehydes are also useful as crosslinking agents. In many cases, when self-crosslinked, the starches exhibit significant viscosity increases which make them useful as thickeners in various applications including food systems.

**Claims**

1. An aldehyde-containing starch ether derivative having the structure R′–O–A–O–Starch, wherein A is

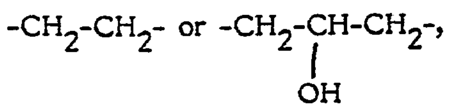

Starch-O represents a starch molecule, and R′ is

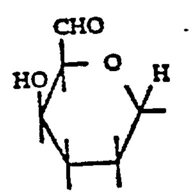

which represents a monosaccharide containing a galactose configuration at the $C_4$ position with the oxygens being attached to the glycosidic carbon atom of the monosaccharide by an acetal linkage and to the starch by an ether linkage.

2. The aldehyde-containing starch ether of claim 1, wherein the monosaccharide is selected from the group consisting of galactose and talose.

3. An aldehyde-containing starch ether derivative, prepared by reacting a mixture of:

a) an aqueous dispersion of a starch ether selected from the group consisting of R″–O–$CH_2$–$CH_2$–O-Starch or

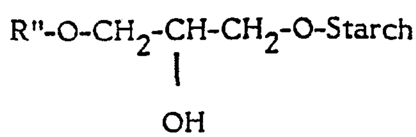

wherein Starch-O-represents a starch molecule and R″ is $CH_2OH$ is

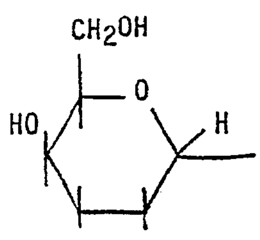

represents a hexose conataining a galactose configuration at the $C_4$ position with the oxygens linking the monosaccharide and the starch being attachend to the glycosidic carbon atom of the hexose by an acetal linkage and to starch by an ether linkage; and

b) a galactose oxidase enzyme in the presence of oxygene, whereby the $C_6$ position of monosaccharide is oxidized to form a carbonyl group.

4. The starch aldehyde of Claim 3, wherein the reaction is conducted in the presence of the enzyme catalase at pH of 4 to 9 and at a temperature of 10 to 60°C.

5. The aldehyde-containing starch ether derivative of Claim 3 having the structure R′–O–A–O-Starch, where A isß –$CH_2$–$CH_2$– or

or 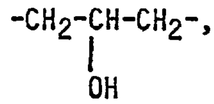

Starch-O represents a starch molecule, and R′ is

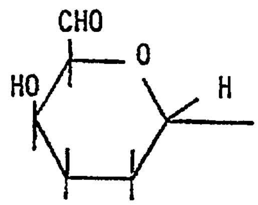

which represents a hexose containing galactose configuration at the $C_4$ position with the oxygens being attached to the glycosidic carbon atom of the hexose by an acetal linkage and to the starch by an ether linkage.

6. The starch aldehyde of Claim 5, wherein the hexose is galactose.

7. The starch aldehyde of Claim 6, wherein ths starch is selected from the group consisting of corn, waxy maize, and tapioca, dextrins, oxidized starches, fluidity or thin boiling starches, and the starch aldehyde has a carbonyl content of at least 0.25%.

8. In a process for preparing an artificial flavor comprising heating together, in an aqueous medium, a mixture comprising at least one amino and a saccharide, wherein the improvement comprises the replacement of at least part of the saccharide with the starch aldehyde of Claim 5.

9. The artificial flavor prepared by the process of Claim 8.

**Revendications**

1. Dérivé d'éther d'amidon à fonctionnalité aldéhyde, répondant à la formule structurale R′–O–A–AO-Amidon, dans laquelle A représente un groupe $–CH_2–CH_2–$ ou

$-CH_2-CH_2-$ ou 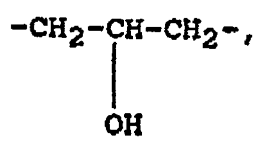

Amidon-O représente une molécule d'amidon, et R′ est un groupe

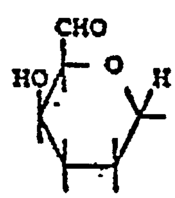

qui représente un monosaccharide ayant la configuration du galactose en position $C_4$, avec fixation des atomes d'oxygène à l'atome de carbone glycosidique du monosaccharide par une liaison acétal et à l'amidon par une liaison éther.

2. Ether d'amidon à fonctionnalité aldéhyde suivant la revendication 1, dans lequel le monosaccharide est choisi dans le groupe comprenant le galactose et le talose.

3. Dérivé d'éther d'amidon à fonctionnalité aldéhyde, préparé par réaction d'un mélange:

a) d'une dispersion aqueuse d'un éther d'amidon choisi dans le groupe comprenant des composés de formule $R''–O–CH_2–CH_2–O$-Amidon ou

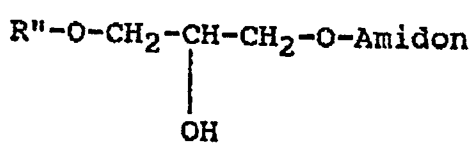

dans laquelle Amidon-O représente une molécule d'amidon et est un groupe

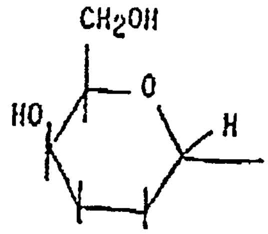

qui représente un hexose ayant la configuration du galactose en position $C_4$, avec fixation des atomes d'oxygène liant le monosaccharide et l'amidon à l'atome de carbone glycosidique de l'hexose par une liaison acétal et à l'amidon par une liaison éther; et

b) d'un enzyme du type galactose-oxydase, en présence d'oxygène, la position $C_6$ du monosaccharide étant ainsi oxydée pour former un groupe carbonyle.

4. Dérivé d'amidon à fonctionnalité aldéhyde suivant la revendication 3, dans lequel la réaction est conduite en présence de l'enzyme appelé catalase, à un pH de 4 à 9 et à une température de 10 à 60°C.

5. Dérivé d'éther d'amidon à fonctionnalité aldéhyde suivant la revendication 3, répondant à la formule structurale R'–O–A–O-Amidon, dans laquelle A représente un groupe

$$-CH_2CH_2- \text{ ou } -CH_2-\underset{\displaystyle OH}{\underset{|}{CH}}-CH_2-,$$

Amidon-O représente une molécule d'amidon et R' est un groupe

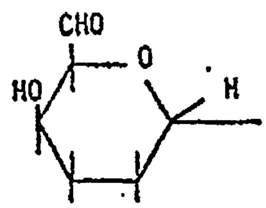

qui représente un hexose ayant la configuration du galactose en position $C_4$, avec fixation des atomes d'oxygène à l'atome de carbone glycosidique de l'hexose par une liaison acétal et l'amidon par une liaison éther.

6. Dérivé d'amidon à fonctionnalité aldéhyde suivant la revendication 5, dans lequel l'hexose est le galactose.

7. Dérivé d'amidon à fonctionnalité aldéhyde suivant la revendication 6, dans lequel l'amidon est choisi dans le groupe comprenant l'amidon de maïs, l'amidon de maïs cireux et la fécule de manioc, des dextrines, des amidons oxydés, l'amidon fluide et l'amidon cuit de faible viscosité, et le dérivé d'amidon à fonctionnalité aldéhyde possède une teneur en groupes carbonyle d'au moins 0,25%.

8. Procédé perfectionné de préparation d'un arôme artificiel, consistant à chauffer ensemble, dans un milieu aqueux, un mélange comprenant au moins un aminoacide et un saccharide, caractérisé en ce que le perfectionnement consiste à remplacer au moins une partie du saccharide par le dérivé d'amidon à fonctionnalité aldéhyde suivant la revendication 5.

9. Arôme artificiel préparé par le procédé suivant la revendication 8.

**Patentansprüche**

1. Aldehydhaltiges Stärkeetherderivat mit der Struktur R'–O–A–O-Stärke, worin A–$CH_2$–$CH_2$– oder

$$-CH_2-\underset{\displaystyle OH}{\underset{|}{CH}}-CH_2-$$

ist, Stärke-O- ein Stärkemolekül bedeutet und R'

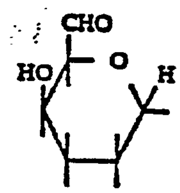

ist, was ein eine Galaktosekonfiguration in der $C_4$-Stellung enthaltendes Monosaccharid bedeutet, wobei die Sauerstoffatome an das glykosidische Kohlenstoffatom des Monosaccharids durch Acetalbindung und an die Stärke durch eine Etherbindung gebunden sind.

2. Aldehydhaltiger Stärkeether nach Anspruch 1, worin das Monosaccharid aus der aus Galaktose und Talose bestehenden Gruppe ausgewählt ist.

3. Aldehydhaltiges Stärkeetherderivat, hergestellt durch Umsetzen einer Mischung aus:

a) einer wässrigen Dispersion eines Stärkeethers, ausgewählt aus der aus $R''-O-CH_2-CH_2-O$-Stärke oder

oder $R''-O-CH_2-\underset{OH}{CH}-CH_2-O$-Stärke

bestehenden Gruppe, worin Stärke-O- ein Stärkemolekül bedeutet und R″

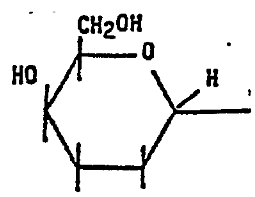

ist, was eine Hexose bedeutet, die eine Galaktosekonfiguration in der $C_4$-Stellung enthält, wobei die das Monosaccharid und die Stärke verbindenden Sauerstoffatome an das glykosidische Kohlenstoffatom der Hexose durch Acetalbindung und an die Stärke durch eine Etherbindung gebunden sind, und

b) einem Galaktoseoxidase-Enzym in Gegenwart von Sauerstoff, wodurch die $C_6$-Stellung des Monosaccharids unter Bildung einer Carbonylgruppe oxidiert wird.

4. Stärkealdehyd nach Anspruch 3, worin die Reaktion in Gegenwart der Enzymkatalase bei einem pH von 4 bis 9 und bei einer Temperatur von 10 bis 60° C durchgeführt wird.

5. Aldehydhaltiges Stärkeetherderivat nach Anspruch 3 mit der Struktur R′–O–A–O-Stärke, worin $A–CH_2–CH_2$–oder

$-CH_2-CH_2-$ oder $-CH_2-\underset{OH}{CH}-CH_2-$

ist, Stärke-O- ein Stärkemolekül bedeutet und R′

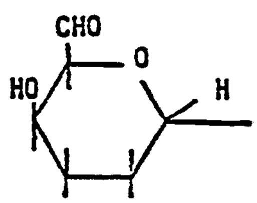

ist, was eine Hexose bedeutet, die eine Galaktosekonfiguration in der $C_4$-Stellung enthält, wobei die Sauerstoffatome an das glykosidische Kohlenstoffatom der Hexose durch eine Acetalbindung und an die Stärke durch eine Etherbindung gebunden sind.

6. Stärkealdehyd nach Anspruch 5, worin die Hexose Galaktose ist.

7. Stärkealdehyd nach Anspruch 6, worin die Stärke aus der aus Mais, Wachsmais und Tapioca, Dextrinen, oxidierten Stärken, Fluiditätsstärken oder dünnkochenden Stärken bestehenden Gruppe ausgewählt ist und der Stärkealdehyd einen Carbonylgehalt von mindestens 0,25% hat.

8. Verbessertes Verfahren zur Herstellung eines künstlichen Aromastoffes, bei welchem in einem wässrigen Medium eine Mischung aus mindestens einer Aminosäure und einem Saccharid erhitzt wird, wobei die Verbesserung darin besteht, dass mindestens ein Teil des Saccharids durch den Stärkealdehyd von Anspruch 5 ersetzt wird.

9. Künstlicher Aromastoff, hergestellt nach dem Verfahren vom Anspruch 8.